# EUROPEAN PATENT SPECIFICATION

(11) **EP 2 129 520 B1**
(45) Date of publication and mention of the grant of the patent: **31.07.2013**
(21) Application number: 08716115.4
(22) Date of filing: 28.02.2008
(51) Int. Cl.: B32B 15/01, C22C 21/12, C22C 21/14, F28F 21/08

(54) **ALUMINIUM ALLOY HAVING HIGH- STRENGTH AT ELEVATED TEMPERATURE**
ALUMINIUMLEGIERUNG MIT HOHER FESTIGKEIT BEI ERHÖHTER TEMPERATUR
ALLIAGE D'ALUMINIUM PRÉSENTANT UNE RÉSISTANCE ÉLEVÉE À HAUTE TEMPÉRATURE

(30) Priority: 09.03.2007 EP 07004904; 12.03.2007 US 894377 P
(43) Date of publication of application: 09.12.2009
(73) Proprietor: Aleris Rolled Products Germany GmbH, 56070 Koblenz (DE)
(72) Inventor: WITTEBROOD, Adrianus Jacobus, NL-1991 HB Velserbroek (NL); VAN DER HOEVEN, Job, Anthonius, NL-2011 NM Haarlem (NL); BÜRGER, Achim, 56203 Höhr-Grenzhausen (DE)
(74) Representative: Müller Schupfner & Partner
(86) International application number: PCT/EP2008/001587
(87) International publication number: WO 2008/110270

(56) References cited:
- EP-A- 1 240 973
- EP-A1- 1 522 600
- WO-A-2004/106566
- JP-A- 3 006 348
- JP-A- 4 066 637
- JP-A- 11 302 764
- JP-A- 2000 119 786
- US-A1- 2002 142 185
- US-A1- 2005 081 965

## Description

### FIELD OF THE INVENTION

The invention relates to an aluminium alloy having increased strength at elevated temperatures, for example at 260°C and at 300°C, and which alloy can be used for heat exchangers. Ideally, the aluminium alloy according to the invention is provided as a rolled brazing sheet material or as extruded product for tubing for heat exchanger devices. Furthermore, the invention relates to a brazed assembly of components comprising at least one component of the aluminium alloy according to this invention.

### BACKGROUND TO THE INVENTION

As will be appreciated herein below, except as otherwise indicated, alloy designations and temper designations refer to the Aluminum Association designations in Aluminum Standards and Data and the Registration Records, as published by the Aluminum Association in 2006.

For any description of alloy compositions or preferred alloy compositions, all references to percentages are by weight percent unless otherwise indicated.

Diesel engine turbo chargers are operating and will operate at higher temperatures and pressures due to meeting increasing emissions restriction standards. In order to reduce the emissions, it is necessary to have a higher performance, which is normally obtained at a higher charge air cooler working temperature and pressure. Operating temperatures at the inlet of a charge air cooler may go up to a range of 230°C to 260°C, while operating at a pressure in the range of 3.0 to 3.5 bar.

Hence, there appears to be a need for an aluminium alloy having a high strength in the post-braze condition, which high strength is maintained after being exposed for a substantial time to an elevated temperature, e.g. 260°C or even 300°C. It is desirable that high strength levels are combined with a good corrosion resistance, and ideally also with a good resistance against thermal fatigue.

Ideally, variants of the products also must be brazeable by a variety of brazing methods, most notably, vacuum and flux-based (e.g. CAB or Nocolok^{™}) brazing processes, to have as wide an application as possible.

JP4066637 A discloses an Al alloy for a heat exchanger provided with good extrudability, rollability and workability as well as excellent strength, pitting resistance and weld cracking resistance, having a composition consisting of, by weight, 0.20 to 0.7% Mn, 0.05 to 0.7% Cu, 0.03 to 0.5% Ag and 0.1 to 1.0% Fe+Si as well as >2 Fe/Si, furthermore containing one or more kinds among 0.005 to 0.2% Ti, 0.0001 to 0.08% B, 0.01 to 0.25% Zr and 0.03 to 0.2% Cr and the balance Al with inevitable impurities.

### SUMMARY OF THE INVENTION

It is an object of the invention to provide an aluminium alloy having increased post-braze strength after being exposed for a long period of time to an elevated temperature while displaying good post-braze corrosion resistance.

It is another object of the invention to provide an aluminium alloy having an increased post-braze yield strength after being exposed for at least 1,000 hours to an temperature of 260°C.

It is another object of the invention to provide an aluminium alloy having an increased post-braze yield strength after being exposed for at least 2,000 hours to an temperature of 260°C.

It is yet another object of the invention to provide an aluminium alloy having an increased post-braze yield strength after being exposed for at least 2,000 hours to an temperature of 300°C.

These and other objects and further advantages are met or exceeded by the present invention concerning an aluminium alloy having high post-braze strength at elevate temperatures for heat-exchangers, the aluminium alloy consisting of, in wt.%,
Cu 1.3 to 2.2
Mn 0.1 to 1.8
Ag 0.1 to 0.8, Ti 0.06 to 0,8,
one or more selected from the group consisting of:
Zr 0.03 to 0.5
Cr 0.03 to 0.5
and wherein 0.1 < (Cr+Zr+Ti) < 1.5,
Mg up to 0.4,
Fe 0.05 to 0.6
Si up to 0.5
Zn up to 0.5,
other elements and impurities each <0.05, total <0.2,
balance aluminium.

The aluminium alloy according to this invention offers an increased post-braze strength, typically of 40 MPa or more after being exposed for a long period of time, for example 1,000 or 2,000 hours or even longer at elevated temperature, for example 260°C or 300°C, in combination with maintaining a high level of corrosion resistance when measured in a SWAAT test. The aluminium alloy can be used in brazing sheet products as well as in extruded products, such as tubing. Variants of the products can be brazed by a variety of brazing methods, e.g. vacuum and flux-based (e.g. CAB or Nocolok^{™}) brazing processes.

### DETAILED DESCRIPTION OF PREFERRED EMBODIMENTS

The present invention provides an aluminium alloy having high post-braze strength at elevate temperatures for heat-exchangers, the aluminium alloy consisting of, in wt.%.
Cu 1.3 to 2.2, preferably 1.3 to 2.1
Mn 0.1 to 1.8, preferably 0.2 to 1.2
Ag 0.1 to 0.8, preferably 0.2 to 0.6
Ti 0.06 to 0.8, preferably 0.06 to 0.65
one or more selected from the group consisting of:
Zr 0.03 to 0.5, preferably 0.03 to 0.4
Cr 0.03 to 0.5, preferably 0.03 to 0.4
and wherein 0.1 < (Cr+Zr+Ti) < 1.5,
Mg up to 0.4,
Fe 0.05 to 0.6, preferably 0.05 to 0.4
Si up to 0.5, preferably up to 0.35
Zn up to 0.5, preferably up to 0.3
other elements and impurities each <0.05, total <0.2,
balance aluminium.

In a preferred embodiment the lower limit for the Cu content is 1.5%. A preferred upper-limit for the Cu-content is 2.1%, and more preferably 1.9%. Cu is the main strengthening element in the alloy product according to this invention, but it has been found that a too high level may adversely affect the corrosion performance.

In a preferred embodiment the lower limit for the Mn content is 0.2%, and more preferably 0.25%. A preferred upper-limit for the Mn-content is 1.2%, and more preferably 1.1%. Together with Cu the addition of Mn contributes to increase the post-braze strength and the Mn binds some of the Si present thereby avoiding a low solidus temperature of the alloy product. However, if the Mn level is too high there is an increasing risk of the formation of undesirable large intermetallic phases.

Together with the Cu and the Mn, the addition of silver is an essential alloying element and should be present in a range of 0.1 to 0.8%. A more preferred lower limit for the Ag is 0.2%, and more preferably 0.25%. A more preferred upper-limit is 0.6%, and more preferably 0.5%, and even more preferably 0.3%. Although speculative, but it is believed that the addition of the Ag stabilises the Al-Cu phases formed and thereby contributing amongst others to the desirable post-braze strength at elevated temperature.

The alloy contains Ti within the range of 0.06 to 0,8% in combination with either only Cr or only Zr, or a combined addition of Cr and Zr. It has been found that the addition of Ti obtains a sufficient high post-braze strength after severe over-ageing, in particular when also the corrosion resistance should be held at a high level. The alloy should contain one or more elements from the group consisting of Cr and Zr. The sum of Ti, Cr, and Zr additions should be at least 0.1%, and preferably at least 0.2%, and more preferably of at least 0.3%, in order to have a noticeable effect on the post-braze strength at elevated temperature and on the corrosion resistance. The sum of these three alloying elements should not exceed 1.5%, because otherwise large intermetallic compounds are formed having an adverse effect on formability, post-braze strength and corrosion resistance. In a more preferred embodiment, and preferably when the stock for rolling or extrusion is made via regular Direct-Chill casting or similar techniques having solidification rates, the sum of these three elements should not exceed 0.9%, and preferably does not exceed 0.7%, and more preferably does not exceed 0.5%.

The higher end of the Mn, Zr, Cr, Ti and Fe ranges can be used in particular when the alloy product is being manufactured using casting techniques having a relatively high cooling rate during the casting process such as with regular continuous casting techniques (e.g., slab casting, twin roll casting, belt casting, drag casting, etc.). Where the alloy is manufactured using ingot casting techniques such as regular DC-casting, then the upper-limit for these elements should preferably be set somewhat lower so as to avoid the formation of large detrimental intermetallics. Such intermetallics tie up considerable amounts of these alloying elements, rending a lower percentage available to contribute to the required engineering properties. In particular large intermetallics have an adverse effect on formability, and they may hinder further down gauging of the product form, and they can have an adverse effect on the corrosion resistance. High solidification rates during casting are also desirable because they allow for the introduction of higher volume-fractions of fine dispersoids into the alloy. As such, thin ingots are more desirable than thicker ingots for Direct-Chill casting of core alloys. Continuous casting is further preferred, because of the even higher solidification rates attained.

Depending on the brazing method applied, Mg can be present in the alloy or is preferably at a low level. In case the alloy product is used in a flux-based brazing process, the Mg is preferably kept at a level of <0.1%, more preferably <0.05%. Whereas in a vacuum brazing process Mg can be present at higher levels, typically in a range of 0.1 to 0.4%. In the embodiment where there is an interliner present between the core alloy and the brazing material, higher Mg content can be tolerated also when used in a flux-based brazing process. A more preferred upper-limit for the Mg-content is 0.2%.

Fe should be in a range of 0.05 to 0.6%. At too low levels the product is commercially less attractive, and some Fe is preferred for formability purposes. A preferred lower-limit for the Fe-content is about 0.07%, and more preferably 0.1%. A preferred upper-limit for the Fe-content is 0.4%.

Si is a regular element in aluminium alloys and can be present up to 0.5%, and preferably up to 0.3%, and more preferably up to 0.2%. High Si levels in combination with the required Cu levels required for the alloy product leads to a too low solidus temperature.

Zn is not purposively added to the alloy according to this invention, but can be tolerated without adversely affecting relevant properties to a level of up to 0.5%. In a more preferred embodiment the upper-limit for the Zn content is 0.2%, and more preferably 0.1%.

In the alloy product according to the invention the balance is made by aluminium, and other elements and unavoidable impurities can be present each <0.05, and the total of such elements is <0.2.

In a particular embodiment of the aluminium alloy it concerns a product having a composition consisting of, in wt.%:
Cu 1.3 to 2.2, preferably 1.5 to 2.1
Mn 0.2 to 1.2, preferably 0.25 to 1.1
Ag 0.1 to 0.5, preferably 0.23 to 0.5
Ti 0.06 to 0.65, preferably 0.08 to 0.5
one or two or more selected from the group consisting of:
   Zr 0.03 to 0.5
   Cr 0.03 to 0.5,
and wherein 0.1 < (Cr+Zr+Ti) < 1.0, preferably 0.2 < (Cr+Zr+Ti) < 0.5
Mg up to 0.15,
Fe 0.05 to 0.5, preferably 0.05 to 0.4
Si up to 0.5, preferably up to 0.3
Zn up to 0.5, preferably up to 0.1,
other elements and impurities each <0.05, total <0.2,
balance aluminium.

In another embodiment of the aluminium alloy product according to the invention, the alloy product is free of Ni and of Sc. In practical terms this would mean that Ni or Sc are each present at the level of an impurity or incidental element, so at a level of <0.05%. More preferably the alloy is substantially free of Ni and of Sc. With substantially free" is meant that no purposeful addition of Ni or Sc was made to the chemical composition but that due to impurities and/or leaking from contact with manufacturing equipment, trace quantities of Ni or Sc may nevertheless find their way into the aluminium alloy product.

In an embodiment of the aluminium alloy product according to this invention it has a post-braze yield strength of 40 MPa or more, and preferably 45 MPa or more, and in the best examples 50 MPa or more, after being exposed for 2,000 hours to a temperature of 300°C and whereby the post-braze yield strength is also being measured at 300°C.

In an embodiment of the aluminium alloy product according to this invention the alloy when manufactured to an H2X temper has a post-braze corrosion resistance of 20 days or more measured in a SWAAT-test according to ASTM G85 A3 and measured at 49°C as stipulated by the ASTM G85 norm, after firstly being exposed for 2,000 hours to a temperature of 300°C. In a preferred embodiment the corrosion resistance is at least 25 days, and in the best examples at least 30 days without perforation. Furthermore, the alloy when manufactured to an O-temper has a post-braze corrosion resistance of 20 days or more, and preferably 30 days or more, measured in a SWAAT-test according to ASTM G85-A3 and measured at 49°C as stipulated by the ASTM G85 norm, after firstly being exposed for 2,000 hours to a temperature of 300°C. Since this corrosion testing procedure is well known in the art, a further description of its particulars is not believed necessary for understanding of the invention.

In an embodiment of the invention the aluminium alloy is provided in the form of an extruded product, in particular as tubing, suitable for application in a brazed product such as a heat-exchanger. This tubing is often made by extruding a cast and/or worked shape such as a billet. The billet is subjected to the appropriate heating for extrusion, and is heat treated and/or quenched/aged in the appropriate way depending on the desired end properties. The tubing, either round, flat or the like, can then be assembled with other components, e.g. headers, fin stock and the like and subjected to a brazing cycle to interconnect the various pieces together as a unitary brazed assembly.

In another preferred use of the invention the aluminium alloy is incorporated in a brazing sheet product comprising of a core alloy made from the aluminium alloy according to this invention and clad on one or both sides with a brazing material, preferably a 4xxx cladding alloy.

The cladding to the aluminium brazing sheet incorporating as core alloy the alloy according to this invention is made from a brazing material, and preferably made of a 4xxx-series aluminium alloy. Typical alloys within this series are AA4343, AA4045, AA4047, AA4004, AA4104, AA4147, or some near compositional variants thereof. The 4xxx-series alloy may further contain one or more selected from the group consisting of Zn, In, and Sn, in a concentration tailored to effect a desired electrochemical potential within and adjacent to a brazing joint.

It should also be noted that, in products requiring that both outer surfaces be clad with brazing material, the most typical application would have similar brazing materials; however, the selection of the brazing alloy is dependent on the brazing method employed and the design of the final part being brazed.

In another embodiment of the invention, the core alloy and the clad brazing material, preferably a 4xxx-series, are separated by an interliner or an interlayer, such that the core is bonded to an interliner, and the interliner is, in turn, bonded to the 4xxx-series alloy. This structure minimizes localized corrosion, promotes good brazeability, reduces liquid film migration, and, by suitable selection of the interliner alloy, enhances corrosion resistance, such that the interliner alloy sacrificially protects the underlying core alloy. An example of a suitable interliner would be an 1xxx- or 3xxx-series alloy, or a 1xxx- or 3xxx-series alloy with a purposive addition of Zn below about 2%, or a purposive addition of In below about 1%.

In an embodiment of the brazing sheet product there is proved a core alloy bonded on both sides to an interliner, and each interliner is, in turn, bonded to a 4xxx-series alloy.

In another embodiment of the brazing product there is provided an outerliner or waterside liner bonded on one side of the core alloy and a clad brazing material bonded to the other side of the core alloy. Optionally there may be provided an interliner between the core alloy and the clad brazing material. The outerliner would generally be of an alloy tailored to provide high corrosion resistance or even corrosion combined with erosion resistance in the environment to which that face of the sheet is exposed. An example of a suitable outerliner would be an aluminium alloy having a purposive addition of Zn, such as for example an AA7072-series alloy. Also an alloy can be used having a purposive addition of Mg to increase the strength of the outerliner such that the outerliner may contribute to the overall post-braze strength of the brazing sheet product. Also a combined addition of Zn and Mg would be a good consideration.

The thickness of the core layer (in percent compared to the total thickness of the brazing sheet product) is preferably in a range of 60 to 90%, the thickness of the interliner or interlayer or outerliner or waterside liner (in percent compared to the total thickness of the brazing sheet) is preferably in a range of 5 to 25% and the thickness of the clad brazing layer is preferably (in percent compared to the total thickness of the brazing sheet) in a range of 4 to 15%. The thickness of the core alloy at final clad composite gauge can be as little as 70 microns to as much as 6 mm.

The brazing sheet or tubing are preferably provided in a fully-annealed "O" temper, or in an H1X, e.g. H111, H2X, e.g. H24, or H3X temper.

For the brazing sheet product according to this invention, the various layers can be bonded in various manners, for example by regular roll bonding, or by casting together the core and the next layer, either the brazing material or the interliner as the case may be, for example by the manufacturing process disclosed in WO-2004/112992 or partially or completely fabricated via a cast process according to US-6,705,384. Both cited patent documents are entirely incorporated herein by reference.

In a further aspect of the invention it relates to a method of use of the aluminium alloy in a brazed assembly of components, the assembly having at least partially a service temperature of 200°C or more, more preferably of 250°C or more, for example at the inlet of the assembly.

In a further aspect of the invention there is provided a brazed heat-exchanger incorporating at least partially the aluminium alloy according to this invention. A typical example of a heat-exchanger benefiting for the aluminium alloy according to this invention having increased post-braze strength at elevated temperatures is a charge air cooler ("CAC").

The invention will now be illustrated with reference to non-limiting embodiments according to the invention.

### EXAMPLES

### Example 1.

On an laboratory scale six different aluminium core alloys were cast to illustrate the principle of the current invention. The core alloys were tested for their strength development in a non-clad condition. The core alloy compositions are in listed Table 1. For all core ingots the balance were inevitable impurities and aluminium. Alloys 4 and 6 are alloys according to this invention.

For each core alloy tested, two variants were manufactured, namely a homogenised core to produce an O-temper product, and a non-homogenised core to produce a product in the H24 temper. The O-temper processing route involved a homogenisation treatment for 10 hours at 600°C, then preheat for about 2 hours at 430°C, then hot rolling to 5 mm, then cold rolling to 0.5 mm, then end annealed for 3 hours at about 350°C. The H24-temper processing route involved a pre-heat for about 2 hours at 430°C, then hot rolled to 5 mm, then cold rolling to 0.5 mm, and then end annealing for 3 hours at about 320°C.

Thereafter all sheet products were subjected to a simulated brazing cycle by holding the sheets for 3 min at a temperature of 590°C. Tensile properties have been measured in a tensile test according to NEN10.002 for measurements at room temperature and according to ASTM E21 for the measurements at elevated temperatures. The strength has been measured in the pre-brazed condition, in the post-brazed condition after 14 days natural ageing at ambient temperature (T4 condition), and in the post-brazed condition after 14 days natural ageing at ambient temperature followed by 8 hours at 300°C (T4 over-aged condition). The tensile properties at room temperature are listed in Tables 2 and 3, and those carried out at 300°C are listed in Table 4.

**Table 1. The chemical composition, in wt.%, of the core alloys tested.**

| **Alloy** | **Alloying element** | | | | | | | |
|---|---|---|---|---|---|---|---|---|
| | **Fe** | **Si** | **Mn** | **Cu** | **Mg** | **Zr** | **Ag** | **Ti** |
| **1** | 0.25 | 0.15 | 1.48 | 0.81 | - | - | - | - |
| **2** | 0.26 | 0.15 | 1.6 | 0.81 | - | 0.18 | - | - |
| **3** | 0.26 | 0.15 | 1.5 | 0.82 | - | 0.12 | - | 0.25 |
| **4** | 0.25 | 0.15 | 0.29 | 1.7 | 0.27 | 0.19 | 0.32 | 0.6 |
| **5** | 0.25 | 0.16 | 0.31 | 1.7 | - | 0.19 | 0.26 | - |
| **6** | 0.26 | 0.15 | 0.34 | 1.7 | - | 0.19 | 0.29 | 0.53 |

**Table 2. Yield strength (YS) in MPa and measured at room temperature of the various core alloys in the O-temper and H24-temper in the pre-braze, post-braze, and post-braze over-aged condition.**

| **Alloy** | **Pre-brazed** | | **Post-brazed T4** | | **Post-brazed T4 over-aged** | |
|---|---|---|---|---|---|---|
| | **O** | **H24** | **O** | **H24** | **O** | **H24** |
| **1** | 62 | 203 | 55 | 59 | 50 | 56 |
| **2** | 125 | 223 | 56 | 61 | 52 | 59 |
| **3** | 137 | 213 | 55 | 63 | 52 | 59 |
| **4** | 83 | 208 | 127 | 127 | 88 | 79 |
| **5** | 57 | 193 | 55 | 60 | 62 | 72 |
| **6** | 61 | 181 | 57 | 61 | 71 | 72 |

**Table 3. Tensile strength (UTS) in MPa and measured at room temperature of the various core alloys in the O-temper and H24-temper in the pre-braze, post-braze, and post-braze over-aged condition.**

| **Alloy** | **Pre-brazed** | | **Post-brazed T4** | | **Post-brazed T4 over-aged** | |
|---|---|---|---|---|---|---|
| | **O** | **H24** | **O** | **H24** | **O** | **H24** |
| **1** | 163 | 240 | 154 | 161 | 150 | 153 |
| **2** | 182 | 257 | 159 | 167 | 153 | 160 |
| **3** | 187 | 252 | 163 | 168 | 157 | 160 |
| **4** | 177 | 241 | 269 | 269 | 205 | 199 |
| **5** | 146 | 216 | 166 | 158 | 167 | 163 |
| **6** | 152 | 204 | 168 | 170 | 181 | 177 |

**Table 4. Post-braze yield strength (in MPa) and post-braze tensile strength (in MPa) for multi-layered brazing sheet products in O-temper and H24-temper measured at a temperature of 300°C after various duration at a temperature of 300°C.**

| **Alloy** | **After 8 hours at 300°C** | | | | **After 3 months at 300°C** | | | |
|---|---|---|---|---|---|---|---|---|
| | **O-temper** | | **H24-temper** | | **O-temper** | | **H24-temper** | |
| | **YS** | **UTS** | **YS** | **UTS** | **YS** | **UTS** | **YS** | **UTS** |
| **4** | 46 | 60 | 49 | 59 | 50 | 60 | 47 | 64 |
| **5** | 37 | 45 | 46 | 54 | 35 | 45 | 45 | 51 |
| **6** | 39 | 53 | 46 | 63 | 44 | 55 | 48 | 55 |

From the results of Table 2 and 3 it can be seen from the comparison of alloys 1, 2 and 3, that the addition of Zr results in an increase of the tensile properties in the pre-braze condition. This effect is stronger with the combined addition of Zr+Ti. However, in the post-brazed T4 over-aged condition most of the positive effect of the Zr and Zr+Ti addition is found lost for the yield strength, and only a small effect remains with regard to the tensile strength.

From the comparison of the non-Ag containing alloys with the Ag-containing alloys it can be seen that the Ag-containing alloys showed no higher pre-braze tensile properties despite their significantly higher Cu content. However, the Ag-containing alloys have all significantly better post-braze properties, more in particular in the over-aged condition.

From the comparison of alloys 5 and 6 it can be seen that there is a significant difference in tensile properties notably in the post-brazed T4 over-aged condition. Thereby illustrating that the alloy according to this invention and having substantial amounts of Ti+Zr has higher tensile properties when subjected for a period of time to an elevated temperature. It has been found that for the alloy according to this invention the beneficial effect of Zr or Zr+Ti is not lost when in the post-braze over-aged condition, contrary to for example with alloys 2 and 3.

From the comparison of alloy 4 and 6, both are alloys according to this invention, that the purposive addition of Mg may result in considerable higher tensile properties in the pre-braze condition as well as in both post-brazed conditions shown. However, for certain brazing techniques, the addition of Mg to the cores alloy is preferably avoided as it may adversely affect other relevant properties, such as the brazeability or the corrosion resistance in certain tempers.

From the results of Table 4 it can be seen that the alloys according to the invention have both in the O-temper and in the H24-temper a yield strength of more than 40 MPa measured at 300°C after being exposed for 2,000 hours to a temperature of 300°C.

### Example 2.

The core alloys 4, 5 and 6 of Example 1 were processed into a multi-layered brazing sheet product, comprising of the core alloy, an interliner bonded on both sides of the core alloy, and a 4xxx-series brazing liner bonded to the interliner. For all multi-layered products the composition of the interliner and the brazing liner was identical, and whereby the interliner and the brazing liner had a composition as listed in Table 5. The multi-layered product were manufactured via a regular roll bonding process. At final gauge the thickness of the multi-layered product was 0.5 mm, and wherein, each interliner had a thickness of 10% of the total product thickness, and each brazing layer had a 10% of the total product thickness.

The multi-layered brazing products were subjected to a simulated brazing cycle similar as in Example 1 and tested for their tensile properties after 14 days natural ageing and 8 hours at 300°C (T4 over-aged) and 14 days natural ageing and 3 months (2,160 hours) at 300°C. The tensile properties were carried out at 300°C and are listed in Table 6. Also the corrosion resistance in a SWAAT test according to ASTM G85 A3 have been determined after 3 months at 300°C, and the results are listed in Table 7.

**Table 5. The chemical composition, in wt.%, of the interliner and of the brazing liner. Balance unavoidable impurities and aluminium.**

| | **Si** | **Fe** | **Cu** | **Mn** | **Mg** | **Cr** | **Zn** | **Ti** |
|---|---|---|---|---|---|---|---|---|
| **Interliner** | 0.07 | 0.19 | 0.77 | 1.3 | <0.01 | 0.07 | 0.13 | <0.01 |
| **Brazing liner** | 10.0 | 0.15 | - | - | 0.005 | - | 0.035 | 0.016 |

**Table 6. Post-braze yield strength (in MPa) and post-braze tensile strength (in MPa) for multi-layered brazing sheet products in O-temper measured at room temperature ("RT") and measured at 300°C after 2,000 hours exposure at a temperature of 300°C.**

| **Alloy** | **Tested at RT** | | | | **Tested at 300°C** | |
|---|---|---|---|---|---|---|
| | **After 30 days at room temperature** | | **After 30 days at room temperature and then 2,000 hours at 300°C** | | **After 30 days at room temperature and then 2,000 hours at 300°C** | |
| | **YS** | **UTS** | **YS** | **UTS** | **YS** | **UTS** |
| **4** | 117 | 238 | 72 | 164 | 44 | 52 |
| **5** | 57 | 161 | 97 | 168 | 48 | 57 |
| **6** | 64 | 164 | 74 | 159 | 43 | 55 |

**Table 7. SWAAT test results (in days) for multi-layered brazing sheet products in O-temper and H24 temper after being exposed for 3 months at 300°C.**

| **Alloy** | **SWAAT** | |
|---|---|---|
| | **O-temper** | **H24-temper** |
| **4** | 18 | 40 |
| **5** | 16 | 16 |
| **6** | 34 | 33 |

From the results of Table 6 it can be seen that the alloys according to the invention in the O-temper have a post-braze yield strength of more than 40 MPa when measured at 300°C and after being exposed for 2,000 hours to a temperature of 300°C.

And from the results of Table 7 it can be seen that the alloys according to this invention have a better corrosion resistance than the comparative alloy, and whereby alloy 6 has a very good corrosion resistance in both the O-temper and an H2x temper such as the H24-temper.

Whereas it can be seen from Table 6 and 7 that alloy 5 may have a high post-braze strength, but combines this with an undesirable low corrosion performance, thereby rendering it unsuitable for the preferred intended application in for example charge air coolers.

These results illustrate that the alloy product according to the invention is a very attractive candidate for application in brazed assembly which require a high post-braze strength at elevated temperature, in particular a yield strength of more than 40 MPa, after being exposed for a long period of time to the elevated temperature while maintaining a very good corrosion resistance.

## Claims

1. Aluminum alloy having high post-braze strength at elevate temperatures for heat-exchangers, the aluminum alloy consisting of, in wt.%,
| | |
|---|---|
| Cu | 1.3 to 2.2 |
| Mn | 0.1 to 1.8 |
| Ag | 0.1 to 0.8, |
| Ti | 0.06 to 0.8, |
one or more selected from the group consisting of:
| | |
|---|---|
| Zr | 0.03 to 0.5 |
| Cr | 0.03 to 0.5 |
and wherein 0.1 < (Cr + Zr + Ti) < 1.5,
| | |
|---|---|
| Mg | up to 0.4 |
| Fe | 0.05 to 0.6 |
| Si | up to 0.5 |
| Zn | up to 0.5, |
other elements and impurities each <0.05, total <0.2, balance aluminum.

2. Aluminum alloy according to claim 1, wherein the Ti-content is in a range of 0.06 to 0.65%.

3. Aluminum alloy according to claim 1, wherein the Cu-content is in a range of 1.5 to 2.2%.

4. Aluminum alloy according to claim 1, wherein the Cu-content is in a range of 1.5 to 2.1%, and preferably in a range of 1.5 to 1.9%.

5. Aluminum alloy according to claim 1, wherein the Mn-content is in a range of 0.2 to 1.2%, and preferably in a range of 0.25 to 1.2%.

6. Aluminum alloy according to claim 1, wherein the Ag-content is in a range of 0.2 to 0.6%.

7. Aluminum alloy according to claim 1, wherein 0.2% < (Cr + Zr + Ti) < 0.9%.

8. Aluminum alloy according to claim 1, wherein the Mg-content is in a range of <0.1 %, and preferably of <0.05%.

9. Aluminum alloy according to claim 1, wherein the Mg-content is in a range of 0.1 to 0.4%.

10. Aluminum alloy according to claim 1, having a yield strength of 40 MPa or more, preferably 45 MPa or more, after exposure for 2,000 hours to a temperature of 300°C and measured at 300°C.

11. Aluminum alloy according to claim 1, wherein the alloy composition is consisting of, in wt.%:
| | |
|---|---|
| Cu | 1.3 to 2.2 |
| Mn | 0.2 to 1.2 |
| Ag | 0.1 to 0.5, |
| Ti | 0.06 to 0.65, |
one or two selected from the group consisting of:
| | |
|---|---|
| Zr | 0.03 to 0.5 |
| Cr | 0.03 to 0.5 |
and wherein 0.1 < (Cr + Zr + Ti) < 1.0,
| | |
|---|---|
| Mq | up to 0.15 |
| Fe | 0.05 to 0.5 |
| Si | up to 0.5 |
| Zn | up to 0.5, |
other elements and impurities each <0.05, total <0.2.
balance aluminum.

12. Aluminum alloy according to claim 11, wherein the Cu content is 1.5 to 2.1%.

13. Aluminum alloy according to claim 11 or 12, wherein the Mn content is 0.25 to 1.1%.

14. Aluminum alloy according to any one of claims 11 to 13, wherein the Ag content is 0.23 to 0.5%.

15. Aluminum alloy according to any one of claims 11 to 14, wherein the Ti content is 0.08 to 0.5%.

16. Aluminum alloy according to any one of claims 11 to 15, wherein 0.2 < (Cr+Zr+Ti) < 0.5.

17. Aluminum alloy according to claim 1, and wherein the aluminum alloy being in a temper selected from the group of O-temper, H1x-temper, H2x-temper, and H3x-temper.

18. Extruded product for a heat-exchanger, wherein the extruded product is made from the aluminum alloy according to any one of claims 1 to 16.

19. An aluminum alloy brazing sheet product for heat-exchangers, comprising of a core alloy made from the aluminum alloy according to any one of claims 1 to 16, and clad on one or both sides with a brazing material, preferably a 4xxx cladding alloy.

20. An aluminum alloy brazing sheet product for heat-exchangers, comprising of a core alloy made from the aluminum alloy according to any one of claims 1 to 16, and bonded on at least one side to an aluminum alloy interliner which, in turn, is bonded to a brazing material, preferably to a 4xxx cladding alloy.

21. A brazed heat-exchanger incorporating an aluminum alloy according to any one of claims 1 to 16.

22. A brazed charge air cooler incorporating an aluminum alloy according to any one of claims 1 to 16.

## Patentansprüche

1. Aluminiumlegierung mit hoher Festigkeit nach dem Hartlöten bei erhöhten Temperaturen für Wärmetauscher, wobei die Aluminiumlegierung besteht aus, in Gew.-%:
| | |
|---|---|
| Cu | 1,3 bis 2,2 |
| Mn | 0,1 bis 1,8 |
| Ag | 0,1 bis 0,8, |
| Ti | 0,06 bis 0,8, |
einem oder mehreren ausgewählt aus der Gruppe bestehend aus:
| | |
|---|---|
| Zr | 0,03 bis 0,5 |
| Cr | 0,03 bis 0,5, |
und wobei 0,1 < (Cr + Zr + Ti) < 1,5,
| | |
|---|---|
| Mg | bis zu 0,4 |
| Fe | 0,05 bis 0,6 |
| Si | bis zu 0,5 |
| Zn | bis zu 0,5, |
anderen Elementen und Verunreinigungen jeweils <0,05, gesamt <0,2, Rest Aluminium.

2. Aluminiumlegierung nach Anspruch 1, wobei derTi-Gehalt im Bereich von 0,06 bis 0,65% ist.

3. Aluminiumlegierung nach Anspruch 1, wobei der Cu-Gehalt im Bereich von 1,5 bis 2,2% ist.

4. Aluminiumlegierung nach Anspruch 1, wobei der Cu-Gehalt im Bereich von 1,5 bis 2,1%, und bevorzugt im Bereich von 1,5 bis 1,9%, ist.

5. Aluminiumlegierung nach Anspruch 1, wobei der Mn-Gehalt im Bereich von 0,2 bis 1,2%, und bevorzugt im Bereich von 0,25 bis 1,2%, ist.

6. Aluminiumlegierung nach Anspruch 1, wobei der Ag-Gehalt im Bereich von 0,2 bis 0,6% ist.

7. Aluminiumlegierung nach Anspruch 1, wobei 0,2% < (Cr + Zr + Ti) < 0,9%.

8. Aluminiumlegierung nach Anspruch 1, wobei der Mg-Gehalt im Bereich von <0,1 %, und bevorzugt von <0,05%, ist.

9. Aluminiumlegierung nach Anspruch 1, wobei der Mg-Gehalt im Bereich von 0,1 bis 0,4% ist.

10. Aluminiumlegierung nach Anspruch 1, aufweisend eine Dehngrenze von 40 MPa oder mehr, bevorzugt 45 MPa oder mehr, nach 2.000 Stunden Exposition einer Temperatur von 300°C und gemessen bei 300°C.

11. Aluminiumlegierung nach Anspruch 1, wobei die
Legierungszusammensetzung besteht aus, in Gew.-%:
| | |
|---|---|
| Cu | 1,3 bis 2,2 |
| Mn | 0,2 bis 1,2 |
| Ag | 0,1 bis 0,5, |
| Ti | 0,06 bis 0,65, |
einem oder mehreren ausgewählt aus der Gruppe bestehend aus:
| | |
|---|---|
| Zr | 0,03 bis 0,5 |
| Cr | 0,03 bis 0,5, |
und wobei 0,1 < (Cr + Zr + Ti) < 1,0,
| | |
|---|---|
| Mg | bis zu 0,15 |
| Fe | 0,05 bis 0,5 |
| Si | bis zu 0,5 |
| Zn | bis zu 0,5, |
anderen Elementen und Verunreinigungen jeweils <0,05, gesamt <0,2, Rest Aluminium.

12. Aluminiumlegierung nach Anspruch 11, wobei der Cu-Gehalt 1,5 bis 2,1 % ist.

13. Aluminiumlegierung nach Anspruch 11 oder 12, wobei der Mn-Gehalt 0,25 bis 1,1 % ist.

14. Aluminiumlegierung nach einem der Ansprüche 11 bis 13, wobei der Ag-Gehalt 0,23 bis 0,5% ist.

15. Aluminiumlegierung nach einem der Ansprüche 11 bis 14, wobei der Ti-Gehalt 0,08 bis 0,5% ist.

16. Aluminiumlegierung nach einem der Ansprüche 11 bis 15, wobei 0,2 < (Cr+Zr+Ti) < 0,5.

17. Aluminiumlegierung nach Anspruch 1, und wobei die Aluminiumlegierung in einem Härtegrad ausgewählt aus der Gruppe O-Härtegrad, H1x-Härtegrad, H2x-Härtegrad und H3x-Härtegrad ist.

18. Stranggepresstes Produkt für einen Wärmetauscher, wobei das stranggepresste Produkt aus der Aluminiumlegierung nach einem der Ansprüche 1 bis 16 hergestellt ist.

19. Aluminiumlegierungshartlötblechprodukt für Wärmetauscher, umfassend eine Kernlegierung aus der Aluminiumlegierung nach einem der Ansprüche 1 bis 16, und auf einer oder beiden Seiten mit einem Hartlötmaterial, bevorzugt einer 4xxx-Plattierungslegierung, plattiert.

20. Aluminiumlegierungshartlötblechprodukt für Wärmetauscher, umfassend eine Kernlegierung aus der Aluminiumlegierung nach einem der Ansprüche 1 bis 16, und auf wenigstens einer Seite an eine Aluminiumlegierung-Zwischenlage gebunden, welche wiederum an ein Hartlötmaterial, bevorzugt an eine 4xxx-Plattierungslegierung, gebunden ist.

21. Hartgelöteter Wärmetauscher beinhaltend eine Aluminiumlegierung nach einem der Ansprüche 1 bis 16.

22. Hartgelöteter Ladeluftkühler beinhaltend eine Aluminiumlegierung nach einem der Ansprüche 1 bis 16.

## Revendications

1. Alliage d'aluminium présentant une haute résistance après brasage à température élevée pour des échangeurs de chaleur, l'alliage d'aluminium comprenant, en pourcentage en poids :
| | |
|---|---|
| Cu | 1,3 à 2,2 |
| Mn | 0,1 à 1,8 |
| Ag | 0,1 à 0,8, |
| Ti | 0,06 à 0,8 |
un ou plusieurs éléments choisis parmi le groupe comprenant :
| | |
|---|---|
| Zr | 0,03 à 0,5 |
| Cr | 0,03 à 0,5 |
et dans lequel 0,1 < (Cr + Zr + Ti) < 1,5,
| | |
|---|---|
| Mg | jusqu'à 0,4 |
| Fe | 0,05 à 0,6 |
| Si | jusqu'à 0,5 |
| Zn | jusqu'à 0,5, |
d'autres éléments et impuretés, chacun < 0,05 et au total < 0,2,
le reste étant de l'aluminium.

2. Alliage d'aluminium selon la revendication 1, dans lequel la teneur en Ti est dans une plage de 0,06 à 0,65 %.

3. Alliage d'aluminium selon la revendication 1, dans lequel la teneur en Cu est dans une plage de 1,5 à 2,2 %.

4. Alliage d'aluminium selon la revendication 1, dans lequel la teneur en Cu est dans une plage de 1,5 à 2,1 %, et de préférence dans une plage de 1,5 à 1,9 %.

5. Alliage d'aluminium selon la revendication 1, dans lequel la teneur en Mn est dans une plage de 0,2 à 1,2 %, et de préférence dans une plage de 0,25 à 1,2 %.

6. Alliage d'aluminium selon la revendication 1, dans lequel la teneur en Ag est dans une plage de 0,2 à 0,6 %.

7. Alliage d'aluminium selon la revendication 1, dans lequel 0,2 % < (Cr + Zr + Ti) < 0,9%.

8. Alliage d'aluminium selon la revendication 1, dans lequel la teneur en Mg est dans une plage de < 0,1 %, et de préférence < 0,05 %.

9. Alliage d'aluminium selon la revendication 1, dans lequel la teneur en Mg est dans une plage de 0,1 à 0,4 %.

10. Alliage d'aluminium selon la revendication 1, ayant une résistance à la rupture de 40 MPa ou plus, de préférence 45 MPa ou plus, après exposition pendant 2000 heures à une température de 300°C et mesurée à 300°C.

11. Alliage d'aluminium selon la revendication 1, dans lequel la composition de l'alliage est composée, en pourcentage en poids :
| | |
|---|---|
| Cu | 1,3 à 2,2 |
| Mn | 0,2 à 1,2 |
| Ag | 0,1 à 0,5, |
| Ti | 0,06 à 0,65 |
un ou deux éléments choisis parmi le groupe comprenant :
| | |
|---|---|
| Zr | 0,03 à 0,5 |
| Cr | 0,03 à 0,5 |
et dans lequel 0,1 < (Cr + Zr + Ti) < 1,0,
| | |
|---|---|
| Mg | jusqu'à 0,15 |
| Fe | 0,05 à 0,5 |
| Si | jusqu'à 0,5 |
| Zn | jusqu'à 0,5, |
d'autres éléments et impuretés, chacun < 0,05 et au total < 0,2,
le reste étant de l'aluminium.

12. Alliage d'aluminium selon la revendication 11, dans lequel la teneur en Cu est de 1,5 à 2,1 %.

13. Alliage d'aluminium selon la revendication 11 ou 12, dans lequel la teneur en Mn est de 0,25 à 1,1 %.

14. Alliage d'aluminium selon l'une quelconque des revendications 11 à 13, dans lequel la teneur en Ag est de 0,23 à 0,5 %.

15. Alliage d'aluminium selon l'une quelconque des revendications 11 à 14, dans lequel la teneur en Ti est de 0,08 à 0,5 %.

16. Alliage d'aluminium selon l'une quelconque des revendications 11 à 15, dans lequel 0,2 < (Cr + Zr + Ti) < 0,5.

17. Alliage d'aluminium selon la revendication 1, dans lequel l'alliage d'aluminium est tempéré de manière choisie parmi le groupe composé de températion O, températion H1x, températion H2x, et températion H3x.

18. Produit extrudé pour un échangeur de chaleur, dans lequel le produit extrudé est réalisé à partir de l'alliage d'aluminium selon l'une quelconque des revendications 1 à 16.

19. Produit en forme de tôle brasée d'alliage d'aluminium pour des échangeurs de chaleur, comprenant un alliage à coeur réalisé à partir de l'alliage d'aluminium selon l'une quelconque des revendications 1 à 16, et revêtu sur un côté ou sur les deux côtés avec un matériau de brasage, de préférence un alliage de revêtement 4xxx.

20. Produit en forme de tôle brasée d'alliage d'aluminium pour des échangeurs de chaleur, comprenant un alliage à coeur réalisé à partir de l'alliage d'aluminium selon l'une quelconque des revendications 1 à 16, et collé sur au moins un côté sur un doublage en alliage d'aluminium qui est à son tour collé sur un matériau de brasage, de préférence un alliage de revêtement 4xxx.

21. Échangeur de chaleur brasé incorporant un alliage d'aluminium selon l'une quelconque des revendications 1 à 16.

22. Dispositif de refroidissement d'air comprimé brasé incorporant un alliage d'aluminium selon l'une quelconque des revendications 1 à 16.
